# EUROPEAN PATENT SPECIFICATION

(11) **EP 3 464 971 B1**
(45) Date of publication and mention of the grant of the patent: **04.11.2020**
(21) Application number: 17777997.2
(22) Date of filing: 23.05.2017
(51) Int. Cl.: F16K 31/06, F16K 27/02, F16K 27/04

(54) **AN ELECTROHYDRAULIC VALVE WITH ADJUSTABLE PERFORMANCE**
ELEKTROHYDRAULISCHES VENTIL MIT EINSTELLBARER LEISTUNG
VANNE ÉLECTROHYDRAULIQUE À PERFORMANCES RÉGLABLES

(30) Priority: 30.05.2016 TR 201607174
(43) Date of publication of application: 10.04.2019
(73) Proprietor: Hema Endüstri Anonim Sirketi, Çerkezköy/Tekirdag (TR)
(72) Inventor: NAK, Samet, 59501 Tekirdag (TR)
(74) Representative: Kaya, Erdem
(86) International application number: PCT/TR2017/050213
(87) International publication number: WO 2017/209716

(56) References cited:
- EP-A2- 0 845 602
- DE-A1- 10 356 799
- US-A1- 2014 137 955
- US-A1- 2015 226 204

## Description

### TECHNICAL FIELD

The present invention relates to electrohydraulic valves particularly used for lifting and lowering the tail equipment in tractors and in similar agricultural vehicles.

### PRIOR ART

Electrohydraulic valves control the movement of the fluid passing through the valve body by means of the current received from solenoid valves. Accordingly, as a result of the movement of the solenoid valve thanks to the electrical current, fluid passage through the electrohydraulic valve is provided.

A drive pin provided inside the electrohydraulic valve displaces as a result of the movement received from the valve pin of the solenoid valve, and controls the fluid passage. The return of the drive pin is provided by a spring. The resistance of said spring directly affects the performance of the electrohydraulic valve. Accordingly, since the springs show different amount of resistance, different fluid flow rates can be obtained. Moreover, since springs with the same characteristics show different characteristics when they are used in different lengths, the performance of the electrohydraulic valve can change. Thus, each electrohydraulic valve produced is subjected to tests, and it is checked whether their performances are at the desired values or not. During said checking process, the solenoid valve is separated from the valve body of the electrohydraulic valve and the spring is removed and the spring is brought to a length which is longer or shorter than the initial length and it is mounted again. By means of the tests realized afterwards, the performance of the electrohydraulic valve is evaluated again. In case of unsuitableness, the processes are repeated again until suitable values are reached. This leads to serious time and labor loss. EP0845602 discloses an electrohydraulic valve according to the preamble of claim 1.

As a result, because of all of the abovementioned problems, an improvement is required in the related technical field.

### BRIEF DESCRIPTION OF THE INVENTION

The present invention relates to an electrohydraulic valve, for eliminating the above mentioned disadvantages and for bringing new advantages to the related technical field.

The main object of the present invention is to provide an electrohydraulic valve with adjustable operation performance.

In order to realize all of the abovementioned objects and the objects which are to be deducted from the detailed description below, the present invention is an electrohydraulic valve having at least one control element positioned inside at least one movement channel provided on a valve body, and at least one drive pin extending between the control element and a valve pin of a solenoid valve in order to provide said control element to displace in a movement axis, and at least one spring connected to said drive pin. Accordingly, the subject matter electrohydraulic valve comprises an adjustment nut having a center opening wherein the spring and the drive pin are positioned,
the spring is stopped onto a step, provided on the drive pin, from one end and it is stopped onto a spring holder tab of the adjustment nut from the other end,
the movement channel is connected into a nut housing, defined on the side facing the solenoid valve, by means of at least one peripheral tooth provided on the outer wall of the adjustment nut,
the subject matter electrohydraulic valve comprises at least one intervention opening where one end of the valve body is opened to the nut housing and where the other end of the valve body is opened to the outside of the valve body in order to provide rotation thereof inside the nut housing by means of exerting a force to the adjustment nut. Thus, a force can be exerted to the adjustment nut by means of a tool like screwdriver inserted through the intervention opening and the adjustment nut is rotated inside the nut housing. By means of said rotational movement, the adjustment nut displaces in the movement axis. Thus, the length of the spring existing between the adjustment nut and the drive pin can be changed. By means of this, the performance of the electrohydraulic valve can be changed together with the change of the resistance of the spring.

In a preferred embodiment of the invention, at least one adjustment channel is provided on the outer wall of the adjustment nut. Thus, when the adjustment nut is desired to be rotated, the screwdriver is stopped onto the adjustment channel, and the rotation of the adjustment nut is facilitated.

In a preferred embodiment of the invention, pluralities of adjustment channels are provided such that there is a predetermined distance in between. Thus, since the distance between the adjustment channels is known, the rotation amount of the adjustment nut and thus, the displacement amount in the movement axis are determined.

In a preferred embodiment of the invention, the adjustment channel is essentially parallel to the movement axis.

In a preferred embodiment of the invention, the adjustment nut is provided in a cylindrical form. Thus, the rotation of the adjustment nut is facilitated.

In a preferred embodiment of the invention, the spring holder tab, which narrows the center opening, is provided in tab form inside the center opening.

In a preferred embodiment of the invention, the step is provided on a head part of the drive pin.

In a preferred embodiment of the invention, the adjustment nut comprises at least one assembly hole provided on the side thereof facing the solenoid valve. Thus, the fixation of the adjustment nut to the nut housing is facilitated.

According to the invention, at least one closure element is positioned in the intervention opening in a removable manner. Thus, sealing of the intervention opening is provided.

According to the invention, at least one elastic element is provided between the closure element and the adjustment nut inside the intervention opening. Thus, the adjustment nut is tightened and fixed by the closure element by means of the elastic element.

### BRIEF DESCRIPTION OF THE FIGURES

In Figure 1, a representative general view of the subject matter electrohydraulic valve is given.
In Figure 2, a representative cross-sectional view of the control element, adjustment nut and drive pin of the subject matter electrohydraulic valve is given.
In Figure 3, a representative isometric view of the adjustment nut of the subject matter electrohydraulic valve is given.
In Figure 4a and 4b, the representative detailed views of the subject matter electrohydraulic valve during the adjustment thereof are given.

### REFERENCE NUMBERS

- 10: Electrohydraulic valve
- 20: Valve body
- 21: Nut housing
- 22: Intervention opening
- 23: Movement channel
- 24: Fluid channel
- 30: Solenoid valve
- 31: Valve pin

- 40: Adjustment nut
- 41: Center opening
- 42: Spring holder tab
- 43: Peripheral teeth
- 44: Adjustment channel
- 45: Assembly hole

- 50: Drive pin
- 51: Head part
- 52: Step
- 53: Valve pin housing
- 54: Spring

- 60: Control element
- 61: Flow channel
- 62: Barrier

- 70: Elastic element
- 80: Closure element
- 90: Screwdriver
- a: Movement axis

### DETAILED DESCRIPTION OF THE INVENTION

In this detailed description, the subject matter electrohydraulic valve (10) is explained with references to examples without forming any restrictive effect only in order to make the subject more understandable.

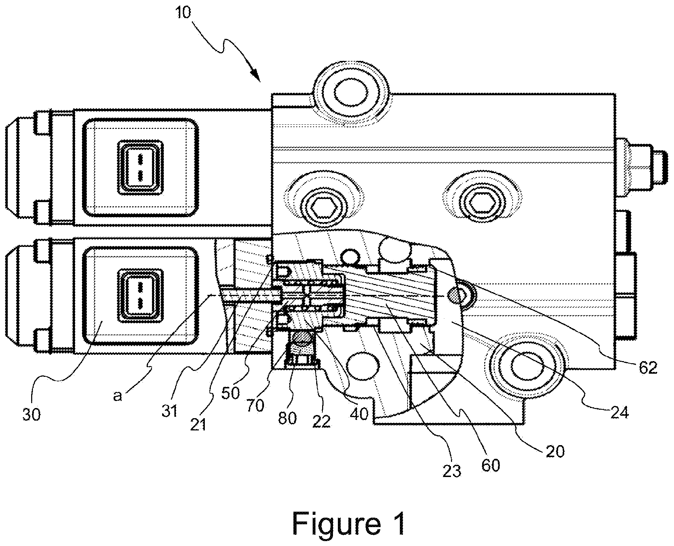

As can be seen in Figure 1, the subject matter electrohydraulic valve (10) has a valve body (20) through which the fluid passes and at least one solenoid valve (30) connected to said valve body (20).

There is a movement channel (23) provided on the side of the valve body (20) connected to the solenoid valve (30). The movement channel (23) is preferably provided in a circular recess form. There is a nut housing (21) provided at the end of the movement channel (23) facing the solenoid valve (30). The nut housing (21) is provided concentrically with the movement channel (23). Moreover, the diameter of the nut housing (21) is preferably greater than the diameter of the movement channel (23). There are teeth (not illustrated in the figure) extending at least partially along the inner wall of the nut housing (21). The movement channel (23) is at the same time connected to a fluid channel (24) of the electrohydraulic valve (10).

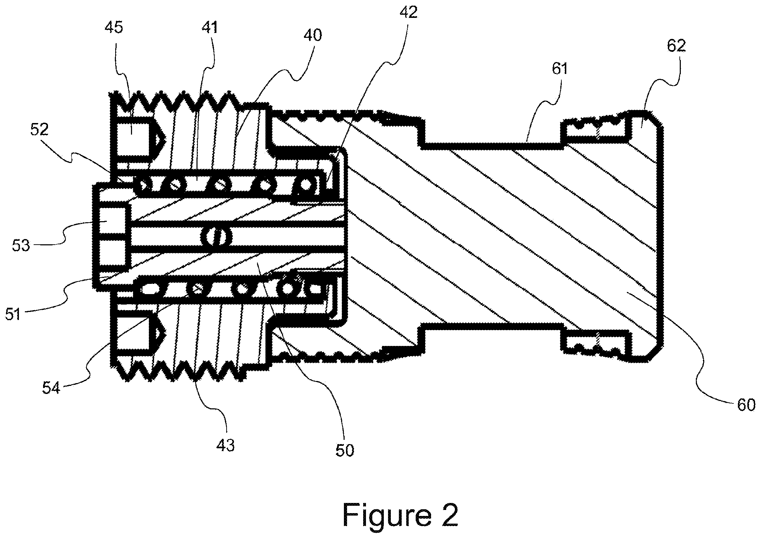

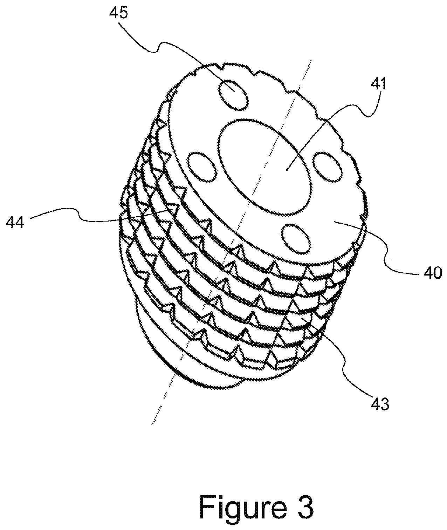

As can be seen in Figure 2 and 3, there is at least one adjustment nut (40) provided inside the nut housing (21). There are peripheral teeth (43) provided at the outer wall of the adjustment nut (40). Thus, the adjustment nut (40) is rotated and fixed into the nut housing (21), and when desired, the position thereof inside the nut housing (21) can be changed. There is at least one assembly hole (45) provided on the lateral surface of the adjustment nut (40). The rotation of the adjustment nut (40) becomes possible with the help of an apparatus placed into said assembly hole (45). There is a center opening (41) provided in gap form at the center of the adjustment nut (40). There is at least one spring holder tab (42) provided in the form of a protrusion which narrows the inner diameter of the center opening (41) in the vicinity of one end of the center opening (41). The spring holder tab (42) is provided in the inverse side with respect to the assembly holes (45) of the center opening (41).

As seen in Figure 2, there is at least one drive pin (50) extending into the adjustment nut (40). The drive pin (50) is provided in a bolt-like form. There is at least one head part (51) provided in the vicinity of one end of the drive pin (50). Thanks to the head part (51), a step (52) is obtained at the outer wall of the drive pin (50). The other end of the drive pin (50) is connected to at least one control element (60) provided inside the movement channel (23). There is at least one spring (54) which encircles the drive pin (50). Said spring (54) is stopped onto the step (52) provided on the drive pin (50) from one end and it is stopped onto the spring holder tab (42), provided on the adjustment nut (40), from the other end.

In general, the control element (60) is provided in a cylindrical form. At the outer wall of the control element (60), there is at least one flow channel (61) provided in a peripheral recess form. There is at least one barrier (62) provided in a peripheral protrusion form at the end part of the control element (60). Said barrier (62) stops onto the inner wall of the movement channel (23). Thus, fluid entry into the flow channel (61) with respect to the position of the control element (60) becomes possible.

The solenoid valve (30) has a valve pin (31). When the solenoid valve (30) is connected to the valve body (20), said valve pin (31) is stopped onto the drive pin (50). In a possible embodiment of the present invention, the valve pin (31) is placed to a valve pin housing (53) provided at the head part (51) of the drive pin (50).

As a result of the placement of said parts, the adjustment nut (40), the valve pin (31), the drive pin (50) and the control element (60) are positioned in a concentric manner to the movement channel (23). In accordance with said positioning manner, the center axes of the valve pin (31), the drive pin (50), the control element (60) and the adjustment nut (40) are defined as a movement axis (a).

There is an intervention opening (22) provided on the valve body (20). Said intervention opening (22) is provided in the form of a hole whose one end is opened outwards the valve body (20) and whose other end is opened into the nut housing (21). The intervention opening (22) is provided at a size such that the tip of a hand tool like screwdriver (90) can be inserted. There is at least one elastic element (70) and at least one closure element (80) provided inside the intervention opening (22). The elastic element (70) is tightened between the outer wall of the adjustment nut (40) and the closure element (80). The closure element (80) can be a plug with o-ring.

There are pluralities of adjustment channels (44) provided at the outer wall of the adjustment nut (40). Said adjustment channels (44) are arranged around the outer wall of the adjustment nut (40) such that there remains a pre-calculated distance in between. The adjustment channels (44) preferably extend in a substantially parallel manner to the center axis of the nut housing (21). The adjustment channels (44) are preferably provided along the length of the adjustment nut (40).

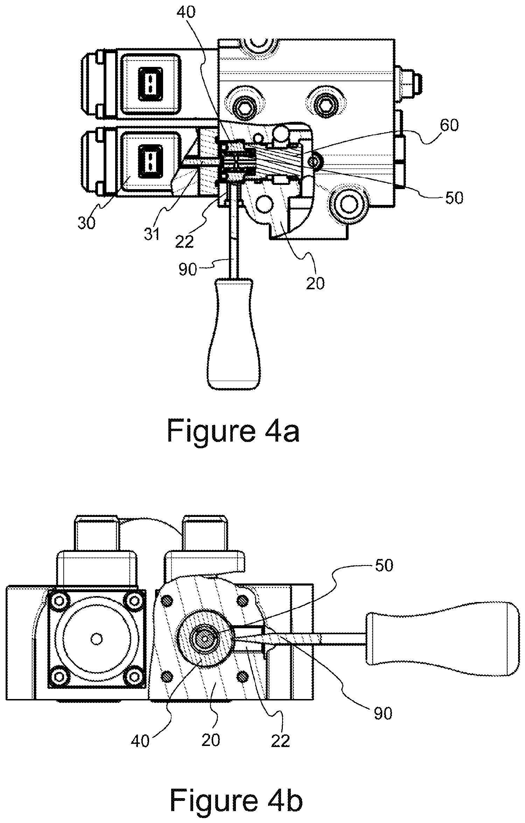

As seen in Figure 4a and 4b, access to the adjustment nut (40) is possible by means of a hand tool like a screwdriver (90) or a similar tool extended into the intervention opening (22). Thus, the adjustment nut (40) is pushed by means of the screwdriver (90) and it can be rotated inside the nut housing (21). As a result of this rotation, the adjustment nut (40) can advance towards the control element (60) or towards the solenoid valve (30) in the movement axis (a). As a result of this advancement, the length of the spring (54), which extends between the step (52) of the drive pin (50) and the spring holder tab (42) of the adjustment nut (40), can be changed. Thus, the resistance of the spring (54) is changed. Thus, as a result of the pushing force exerted by the valve pin (31) onto the drive pin (50), advancement amount of the drive pin (50) and of the control element (60) are changed. By means of this, the amount of fluid passing between the barrier (62) and the movement channel (23) changes and the performance of the electrohydraulic valve (10) changes.

In order to prevent changing of the position of the adjustment nut (40) during operation, the elastic element (70) is placed into the intervention opening (22) and the adjustment nut (40) is fixed by means of tightening with the closure element (80). Moreover, thanks to the elastic element (70) and the closure element (80), sealing of the intervention opening (22) is also provided.

In the light of said structural details, the performance adjustment of the subject matter electrohydraulic valve (10) is realized as follows.

The spring (54) is fixed between the drive pin (50) and the adjustment nut (40) such that the spring (54) has a predetermined initial length. In other words, the spring (54) is adjusted such that it has a length which is shorter than the length where it is in free form. Afterwards, the electrohydraulic valve (10) is subjected to test and its performance is measured. Depending on the measurement value, the decision whether the hardness of the spring (54) is to be decreased or increased is given. Accordingly, by means of a screwdriver (90) inserted through the intervention opening (22), the rotation of the adjustment nut (40) inside the nut housing (21) is provided. While the adjustment nut (40) is rotating, at the same time, it displaces in the movement axis (a). Depending on the rotation direction of the adjustment nut (40), the movement direction of the adjustment nut (40) also changes in the movement axis (a). Thus, the length of the spring (54), positioned between the spring holder tab (42) of the adjustment nut (40) and the step (52) of the drive pin (50), is increased or reduced. Thus, the resistance of the spring (54) is changed. Afterwards, the electrohydraulic valve (10) is subjected to test again and it is checked whether the performance reaches the desired value or not. In case the desired values cannot be obtained, the position of the adjustment nut (40) is changed again, and the processes made are repeated. When the electrohydraulic valve (10) reaches the desired performance values, the intervention opening (22) is closed by the elastic element (70) and by the closure element (80), and the adjustment nut (40) is fixed.

In the preferred embodiment of the present invention, the number of adjustment channels (44) provided around the adjustment nut (40) and the distance in between are known. Thus, as the adjustment nut (40) is rotated at a distance which is equal to the distance between the two adjustment channels (44), the degree of rotation to be realized by the adjustment nut (40) is known. Besides, since the tooth type and tooth step of the peripheral teeth (43) around the adjustment nut (40) are known, the displacement amount to be realized by the adjustment nut (40) in accordance with the rotation amount thereof can be calculated. In other words, when the adjustment nut (40) is rotated, the displacement amount to be realized by the adjustment nut (40) in the movement axis (a) in accordance with the rotation amount thereof is known. By means of this, the change in the length of the spring (54) is also known. Thus, as a result of the first test realized on the electrohydraulic valve (10), the change amount of the length of the spring (54) is determined and the adjustment nut (40) is rotated accordingly as required. By means of this, the electrohydraulic valve (10) can be easily brought to the desired performance value.

Since there is no need to remove the solenoid valve (30) and the spring (54) for changing the length of the spring (54) in the subject matter electrohydraulic valve (10), rapid adjustment is possible.

The protection scope of the present invention is set forth in the annexed Claims and cannot be restricted to the illustrative disclosures given above, under the detailed description. It is because a person skilled in the relevant art can obviously produce similar embodiments under the light of the foregoing disclosures, without departing from the main principles of the present invention.

## Claims

1. An electrohydraulic valve (10) having at least one control element (60) positioned inside at least one movement channel (23) provided on a valve body (20), and at least one drive pin (50) extending between the control element (60) and a valve pin (31) of a solenoid valve (30) in order to provide said control element (60) to displace in a movement axis (a), and at least one spring (54) connected to said drive pin (50), wherein the electrohydraulic valve (10) comprises an adjustment nut (40) having a center opening (41) wherein the spring (54) and the drive pin (50) are positioned,
the spring (54) is stopped onto a step (52), provided on the drive pin (50), from one end and is stopped onto a spring holder tab (42) of the adjustment nut (40) from the other end,
the movement channel (23) is connected into a nut housing (21), defined on the side facing the solenoid valve (30), by means of at least one peripheral tooth (43) provided on the outer wall of the adjustment nut (40), wherein the electrohydraulic valve (10) comprises at least one intervention opening (22) where one end of the valve body (20) is opened to the nut housing (21) and where the other end of the valve body (20) is opened to the outside of the valve body (20) in order to provide rotation thereof inside the nut housing (21) by means of exerting a force to the adjustment nut (40), **characterized in that** at least one closure element (80) is positioned in the intervention opening (22) in a removable manner and at least one elastic element (70) is provided between the closure element (80) and the adjustment nut (40) inside the intervention opening (22).

2. An electrohydraulic valve (10) according to claim 1, wherein at least one adjustment channel (44) is provided on the outer wall of the adjustment nut (40).

3. An electrohydraulic valve (10) according to claim 2, wherein pluralities of adjustment channels (44) are provided such that there is a predetermined distance in between.

4. An electrohydraulic valve (10) according to claim 2 or 3, wherein the adjustment channel (44) is essentially parallel to the movement axis (a).

5. An electrohydraulic valve (10) according to any one of the preceding claims, wherein the adjustment nut (44) is provided in a cylindrical form.

6. An electrohydraulic valve (10) according to claim 1, wherein the spring holder tab (42), which narrows the center opening (41), is provided in tab form inside the center opening (41).

7. An electrohydraulic valve (10) according to claim 1, wherein the step (52) is provided on a head part (51) of the drive pin (50).

8. An electrohydraulic valve (10) according to claim 1, wherein the adjustment nut (40) comprises at least one assembly hole (45) provided on the side thereof facing the solenoid valve (30).

## Patentansprüche

1. Elektrohydraulisches Ventil (10) mit mindestens einem Steuerelement (60), das in mindestens einer auf einem Ventilkörper (20) vorgesehenen Bewegungsbahn (23) gelagert ist, mindestens einem Mitnehmerstift (50), der sich zwischen dem Steuerelement (60) und einem Ventilstift (31) eines Magnetventils (30) erstreckt, so dass sich das Steuerelement (60) in einer Bewegungsachse (a) verschieben lässt, und mindestens einer Feder (54), die mit dem Mitnehmerstift (50) verbunden ist, wobei das elektrohydraulische Ventil (10) eine Einstellmutter (40) mit einer mittig angeordneten Öffnung (41) umfasst, innerhalb welcher die Feder (54) und der Mitnehmerstift (50) angeordnet sind,
wobei die Feder (54) von einem Ende auf einer am Mitnehmerstift (50) vorgesehenen Stufe (52) und vom anderen Ende auf einer Federhalterlasche (42) der Einstellmutter (40) angeschlagen ist;
wobei die Bewegungsbahn (23) mittels mindestens einem an der Außenwand der Einstellmutter (40) angeordneten Zahnkranz (43) mit einem auf der dem Magnetventil (30) zugewandten Seite begrenzten Muttergehäuse (21) verbunden ist;
und wobei das elektrohydraulische Ventil (10) mindestens eine Eingriffsöffnung (22) umfasst, wo ein Ende des Ventilkörpers (20) sich zum Muttergehäuse (21) hin und das andere Ende des Ventilkörpers (20) sich nach der Außenseite des Ventilkörpers (20) hin öffnet, so dass es sich durch eine auf die Einstellmutter (40) ausgeübte Kraft innerhalb des Muttergehäuses (21) dreht, **dadurch gekennzeichnet, dass** mindestens ein Verschlusselement (80) entfernbar in der Eingriffsöffnung (22) angeordnet ist und mindestens ein elastisches Element (70) zwischen dem Verschlusselement (80) und der Einstellmutter (40) innerhalb der Eingriffsöffnung (22) vorgesehen ist.

2. Elektrohydraulisches Ventil (10) nach Anspruch 1, wobei an der Außenwand der Einstellmutter (40) mindestens ein Einstellkanal (44) vorgesehen ist.

3. Elektrohydraulisches Ventil (10) nach Anspruch 2, wobei mehrere Einstellkanäle (44) derart vorgesehen sind, dass dazwischen jeweils ein vorbestimmter Abstand besteht.

4. Elektrohydraulisches Ventil (10) nach Anspruch 2 oder 3, wobei der Einstellkanal (44) sich im Wesentlichen parallel zur Bewegungsachse (a) erstreckt.

5. Elektrohydraulisches Ventil (10) nach einem der vorhergehenden Ansprüche, wobei die Einstellmutter (40) in einer zylindrischen Form vorgesehen ist.

6. Elektrohydraulisches Ventil (10) nach Anspruch 1, wobei die Federhalterlasche (42), die die mittig angeordnete Öffnung (41) einengt, innerhalb der mittig angeordneten Öffnung (41) in Form einer Lasche vorgesehen ist.

7. Elektrohydraulisches Ventil (10) nach Anspruch 1, wobei die Stufe (52) an einem Kopfteil (51) des Mitnehmerstifts (50) vorgesehen ist.

8. Elektrohydraulisches Ventil (10) nach Anspruch 1, wobei die Einstellmutter (40) mindestens ein Montageloch (45) umfasst, das auf ihrer dem Magnetventil (30) zugewandten Seite vorgesehen ist.

## Revendications

1. Une vanne (10) électro-hydraulique ayant au moins un élément de contrôle (60) positionné à l'intérieur d'au moins un canal de déplacement (23) prévu sur un corps de vanne (20), et au moins une goupille d'entraînement (50) s'étendant entre l'élément de contrôle (60) et une tige de vanne (31) d'une électrovanne (30) afin de fournir ledit élément de contrôle (60) pour le déplacer dans un axe de mouvement (a), et au moins un ressort (54) connecté à ladite goupille d'entraînement (50), dans lequel la vanne (10) électro-hydraulique comprend un écrou de réglage (40) ayant une ouverture centrale (41) dans laquelle le ressort (54) et la goupille d'entraînement (50) sont positionnés, le ressort (54) est arrêté sur une marche (52), prévue sur la goupille d'entraînement (50), d'une extrémité et est arrêté sur une languette de support de ressort (42) de l'écrou de réglage (40) de l'autre extrémité, le canal de déplacement (23) est relié à un logement d'écrou (21), défini sur le côté faisant face à l'électrovanne (30), au moyen d'au moins une dent périphérique (43) prévue sur la paroi extérieure de l'écrou de réglage (40), dans laquelle la vanne (10) électro-hydraulique comprend au moins une ouverture d'intervention (22) où une extrémité du corps de vanne (20) est ouvert sur le logement d'écrou (21) et où l'autre extrémité du corps de vanne (20) est ouverte sur l'extérieur du corps de vanne (20) afin d'en assurer la rotation à l'intérieur du logement d'écrou (21) au moyen d'exercer une force sur l'écrou de réglage (40), **caractérisé en ce qu'**au moins un élément de fermeture (80) est positionné dans l'ouverture d'intervention (22) de manière amovible et au moins un élément élastique (70) est prévu entre l'élément de fermeture (80) et l'écrou de réglage (40) à l'intérieur l'ouverture d'intervention (22).

2. Selon la revendication 1, une vanne (10) électro-hydraulique dans laquelle au moins un canal de réglage (44) est prévu sur la paroi extérieure de l'écrou de réglage (40).

3. Selon la revendication 2, une vanne (10) électro-hydraulique dans laquelle plusieurs canaux de réglage (44) sont prévus de telle sorte qu'il existe une distance prédéterminée entre les deux.

4. Selon les revendications 2 ou 3, une vanne (10) électro-hydraulique dans laquelle le canal de réglage (44) est essentiellement parallèle à l'axe de déplacement (a).

5. Selon l'une des revendications précédentes, une vanne (10) électro-hydraulique, dans laquelle l'écrou de réglage (40) est prévu sous une forme cylindrique.

6. Selon la revendication 1, une vanne (10) électro-hydraulique dans laquelle la languette de support de ressort (42), qui rétrécit l'ouverture centrale (41), est prévue sous forme de languette à l'intérieur de l'ouverture centrale (41).

7. Selon la revendication 1, une vanne (10) électro-hydraulique dans laquelle la marche (52) est prévue sur une partie de tête (51) de la goupille d'entraînement (50).

8. Selon la revendication 1, une vanne (10) électro-hydraulique dans laquelle l'écrou de réglage (40) comprend au moins un trou d'assemblage (45) prévu sur son côté tourné vers l'électrovanne (30).
